(19) Europäisches Patentamt
European Patent Office
Office européen des brevets

(11) EP 1 097 957 A1

(12) **EUROPEAN PATENT APPLICATION**

(43) Date of publication:
**09.05.2001 Bulletin 2001/19**

(51) Int Cl.7: **C08G 77/455**

(21) Application number: **99402729.0**

(22) Date of filing: **03.11.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Daikin Industries, Limited**
**Osaka-shi, Osaka 530-0015 (JP)**

(72) Inventors:
- **Boutevin, Bernard**
  **34000 Montpellier (FR)**
- **Caporiccio, Gérardo**
  **20149 Milan (IT)**
- **Rousseau, Alain**
  **34090 Montpellier (IT)**
- **Andre, Sébastien**
  **34570 Pignan (IT)**

(74) Representative: **Nevant, Marc et al**
**Cabinet Beau de Loménie,**
**158, rue de l'Université**
**75340 Paris Cedex 07 (FR)**

(54) **Fluorinated thermoplastic elastomers**

(57) The invention relates to thermoplastic fluoroelastomers with a structure of block copolymer imido-hybrid fluorosilicone of formula (I) or (II):

$$-(AB)_X- \qquad (I)$$

$$A\text{-}B\text{-}A \qquad (II)$$

in which A is an oligoimide hard block obtained by condensation of an aromatic dianhydride with an aromatic diamine and B is a hybrid telechelic α,ω-bis silaoligosiloxane soft block of formula (III) or (III')

$$-SiR^1R^2-(OSiR^1R^2)_m[C_nH_{2n}-R_F-C_nH_{2n}-SiR^1R^2(OSiR^1R^2)_m]_v- \qquad (III)$$

$$-SiR^1R^2O\{SiR^1R^2-(OSiR^1R^2)_m[C_nH_{2n}-R_F-C_nH_{2n}-SiR^1R^2(OSiR^1R^2)m]_v-O-\}_ySiR^1R^2- \qquad (III')$$

in which $R^1$, $R^2$, $R_F$, m, n, v, x and y are as defined in the specification.

The invention also relates to coatings or articles made of said fluoroelastomers.

EP 1 097 957 A1

## Description

Field of the invention

The present invention relates to a novel class of fluorinated thermoplastic elastomers (F-TPE) having the structure :

$$-(AB)_X- \quad (I)$$

or

$$A\text{-}B\text{-}A \quad (II)$$

and to the methods suitable to prepare said polymers. In these structures,

A represents a hard building block containing aromatic polyimides with controlled molecular weight (named here "oligoimide") which are obtained by well known methods of condensation from aromatic dianhydrides with aromatic diamines, and
B represents a soft building block containing hybrid fluorinated silicones with controlled molecular weight (named here hybrid fluoro-oligosiloxane or "hybrid-F-oligosiloxane").

The two types of hard and soft blocks can be linked by known processes such as the silylation reaction, that is the catalyzed addition of the terminal groups-SiH (present at the end of the soft "hybrid-F-oligosiloxane blocks") to the unsaturated groups present at the end of the hard "oligoimide" blocks, or the imidation condensation between blocks A and B belonging to the groups such as tetracarboxylic dianhydride and diamine.
The F-TPEs of the invention can be end-capped by unreactive groups T and/or T'. In this case, the final structure of the F-TPEs of the invention, can be represented by the formula (I') or (II'):

$$T\text{-}(AB)_X\text{-}T' \quad (I')$$

or

$$T\text{-}ABA\text{-}T \quad (II')$$

where T' may represent -AT.

Background of the art

US patent n° 5,527,933 describes a method for obtaining fluorinated hybrid telechelic bis hydrosilanes where a diene (i) is silylated with a dihydrosilane $R^1R^2SiH_2$ to obtain the hybrid silane (ii) :

$$C_nH_{2n-1}R\ C_nH_{2n-1} \quad (i)$$

$$HSiR^1R^2\text{-}C_nH_{2n}\text{-}R\text{-}C_nH_{2n}\text{-}SiR^1R^2H \quad (ii)$$

where $R^1$ and $R^2$ are e.g. a $(C_1\text{-}C_{12})$alkyl or a monovalent radical derived from a (co)telomer of fluorinated olefins.
The diene of formula (i) contains the group R which is a telomer or cotelomer known in the art and prepared e.g. as described in US patent n° 5,110,973.
The fluorinated hybrid telechelic silane (ii) is further converted to telechelic bis silanol (iii) by oxidative hydrolysis catalyzed by $Pd/Al_2O_3$ in the presence of $NaH_2PO_4$ buffered aqueous solution

$$HO(SiR^1R^2\text{-}C_nH_{2n}\text{-}R\text{-}C_nH_{2n}SiR^1R^2O)H \qquad (iii)$$

which silanol can in turn be polymerized in the presence of a catalyst such as tetramethylguanidine fluoroacetate and condensed, and then be terminated by reaction with silane $SiR^1R^2HX$ where X is Cl to obtain copolymers (iv) and (v) respectively

$$HO(SiR^1R^2\text{-}C_nH_{2n}\text{-}R\text{-}C_nH_{2n}\text{-}SiR^1R^2O)_vH \qquad (iv)$$

$$HSiR^1R^2O(SiR^1R^2\text{-}C_nH_{2n}\text{-}R\text{-}C_nH_{2n}\text{-}SiR^1R^2O)_vSiR^1R^2H \qquad (v).$$

The polyaddition of a polyhydropolysiloxane to polyvinyl or to polyunsaturated organic compounds- or polymers containing reactive double bonds- is a well know process reported , e.g., by C. M. Lewis, L. J. Mathias, Polym. Prepr. Amer. Chem. Soc., 34, 1, 491-492 (1993) ; P. R. Dvornic, V. V. Gerov, M. N. Govedarica, Macromolecules, 27, 7575 (1994) and B. Marciniec in "Comprehensive Handbook on Hydrosilylation, Pergamon Press, page 187-191, 1992" and used also in the curing of the commercial organosilicones containing vinyl groups by the action of heat in the presence e.g. of Pt, Pd or Ni-based catalysts.

The hydrosilylation of soft block (v) where v is 0 with vinyl-containing carboxylic anhydride intermediates and the imidization condensation of alkylamino-terminated polysiloxane soft blocks with carboxyanhydride-terminated hard blocks have been described (J. M. Ziegler, F. W. G. Fearon Eds., "Silicon-based Polymer Science : a comprehensive ressource", ACS 224, 1990, chap. 9, 165 ; "Comtemporary Topics in Polymer Science", J. C. Salomon, 7, 47-55, 1992).

<u>Description of the invention</u>

The present invention relates to a new class of fluorinated thermoplastic elastomers (F-TPE) with a structure of block copolymer imido-hybrid fluorosilicone type:

$$-(AB)_X- \qquad (I)$$

$$A\text{-}B\text{-}A \qquad (II)$$

where A is an oligoimide hard block obtained by condensation of an aromatic dianhydride with an aromatic diamine and B is a hybrid telechelic a,ω-bis silaoligosiloxane soft block of formula (III) or (III')

$$-SiR^1R^2\text{-}(OSiR^1R^2)_m[C_nH_{2n}\text{-}R_F\text{-}C_nH_{2n}\text{-}SiR^1R^2(OSiR^1R^2)_m]_V- \qquad (III)$$

$$-SiR^1R^2O\{SiR^1R^2\text{-}(OSiR^1R^2)_m[C_nH_{2n}\text{-}R_F\text{-}C_nH_{2n}\text{-}SiR^1R^2(OSiR^1R^2)m]_v\text{-}O\text{-}\}_ySiR^1R^2- \qquad (III')$$

in which :

- $R^1$ is methyl or phenyl,
- $R^2$ is methyl, $C_2H_4CF_3$ or $C_2H_4C_4F_9$,
- $R_F$ is a linear or branched fluorinated alkylene group of formula (IV)

$$-(C_2H_2F_2)_t\text{-}(R^3CF\text{-}CF_2)_q\text{-}R'_F\text{-}(CF_2\text{-}CFR^3)_q\text{-}(C_2H_2F_2)_t- \qquad (IV)$$

in which :

- $R^3$ is a fluorine atom or a trifluoromethyl,
- $R'_F$ is a $(C_2\text{-}C_6)$perfluoroalkylene,

- q and t are numbers such that the sum of all q and t is a number from 2 to 12,

- m is 1,2 or 3,
- n is 2 or 3,
- v is a number from 1 to 20, preferably from 1 to 12,
- x is a number from 5 to 100, preferably from 10 to 50, and
- y is a number from 1 to 10.

In the compounds of formula (III) and (III'), a preferred group $R_F$ is represented by formulae (IVa) and (IVb)

$$-((CF_3)CF\text{-}CF_2)_q\text{-}R'_F\text{-}(CF_2\text{-}CF(CF_3))_q\text{-} \quad \text{(IVa)}$$

in which q is 1 or 2,

$$-(C_2H_2F_2)_t\text{-}((CF_3)CF\text{-}CF_2)_q\text{-}R'_F\text{-}(CF_2\text{-}CF(CF_3))_q\text{-}(C_2H_2F_2)_t\text{-} \quad \text{(IVb)}$$

in which q is 0,1, 2 or 3 and t is 1, 2 or 3.

Among the compounds of formula (IV), those where $R'_F$ is $C_4F_8$ or $C_6F_{12}$ are especially preferred. The compounds of formula (III) can be prepared by the method described in copending application EP 99... filed on ..., the content of which is incorporated herein by reference. The oligosiloxane blocks B may be terminated by reactive terminal entities such as an hydrogen atom or a cyclohydrocarbonanhydrido or alkylamino group. When the terminal entities of compounds (III) are both hydrogen, as is the case for compound bl below, the method comprises :

1/ reacting a dihydrosiloxane organosiloxane of formula (V)

$$HSiR^1R^2(OSiR^1R^2)_m\, H \quad \text{(V)}$$

in which $R^1$, $R^2$ and m are as defined above,
with a diene of formula (VI)

$$CH_2\text{=}CH\text{-}(CH_2)_r\text{-}R_F\text{-}(CH_2)_r\text{-}CH\text{=}CH_2 \quad \text{(VI)}$$

in which $R_F$ is as defined above and r is 1 or 2,
in the presence of a catalyst and with a molar ratio (V) : (VI) in the range from 1.01 to 1.10, and
2/ reacting the resulting polymeric compound with another organosiloxane (V) as defined above, in the presence of the same catalyst as in step 1/.

The catalyst used in the above method can be any catalyst conventionally used in the silylation reaction, such as for example Platinum-, Palladium-, Rhodium- or Nickel-based catalysts. A platinum-based catalyst, such as Karstedt catalyst (Pt/DiVinylTetraMethylDiSiloxane, hereafter abbreviated to Pt/DVTMDS) is especially advantageous.

The above reaction steps are in general carried out at a temperature in the range of from 60 to 110°C.

The compounds of formula (III') can be obtained by the method described in copending application EP 99..., which method comprises the catalyzed oxidizing hydrolysis of the compounds of formula (III) with hydrogen end groups, preferably by means of $Pd/Al_2O_3$ in the presence of buffered $NaH_2PO_4$ aqueous solution, to obtain compounds (III) with hydroxyl end groups, optional polycondensation of the said compounds to obtain polymeric compounds with a polymerization degree y = 2-10 and with hydroxyl end groups, and end-capping of the compounds obtained above with a group $\text{-}SiR^1R^2H$ by reaction of said compounds with silane $HSiR^1R^2Cl$ to obtain compounds (III', y = 2-10).

A list, that should not be intended as exhaustive, of typical soft oligosiloxane B block intermediates can be represented by the structures b1, b2, b3 below :

b1)

$$H\text{-}SiR^1R^2\text{-}(OSiR^1R^2)_m\text{-}[C_nH_{2n}\text{-}R_F\text{-}C_nH_{2n}\text{-}SiR^1R^2(\text{-}OSiR^1R^2)_m]_V\text{-}H$$

b2) 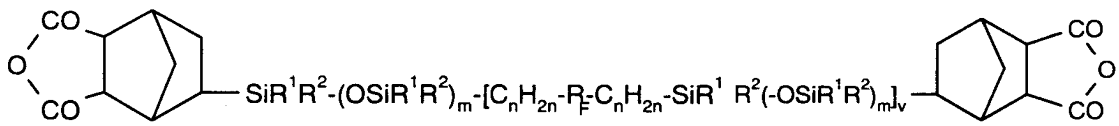

b3)

$$H_2NC_3H_6\text{-}SiR^1R^2\text{-}(OSiR^1R^2)_m\text{-}[C_nH_{2n}\text{-}R_F\text{-}C_nH_{2n}\text{-}SiR^1R^2(\text{-}OSiR^1R_2)_m]_v\text{-}C_3H_6NH_2$$

where m is 1, 2 or 3 and $R_F$ is as defined above.

The soft oligosiloxanes B of structure b1 can be obtained as defined above. According to an alternative method the oligosiloxane (iv) as obtained in US patent N° 5,527,933 can be polymerized in the presence of tetramethylguanidine trifluoroacetate, the resulting polymer is end-capped with dialkylchlorosilane $R^1R^2SiClH$ in the presence of triethylamine and the oligosiloxane b1 is obtained.

As far as compound b2 is concerned, reaction of oligosiloxane b1 with bicyclo[2.2.1]hept-5-ene-2,3-dicarboxylic anhydride leads, according to J. Org. Chem., 52, 1903 (1987), to the said oligosiloxane b2.

The oligosiloxane b3 is obtained by a conventional method according to Makromol. Chem., 190, 2437 (1989) starting from compound b1.

The hard oligoimide blocks A are obtained by condensation of an aromatic dianhydride belonging preferably to the group comprising :

- pyromellitic dianhydride (PMDA),
- benzophenone tetracarboxylic dianhydride (CDPA),
- 3,3'4,4'-Bisphenyltetracarboxylic dianhydride (BPDA)
- 4,4'-(hexafluoroisopropylidene) diphthalic anhydride (6FDA),
- 4,4'-oxydiphthalic anhydride (ODPA),
- 2,3,6,7-naphthalene tetracarboxylic dianhydride (NDA),
- Bis(dicarboxyphenyl) sulfone dianhydride,
- Bis(dicarboxyphenyl) ether dianhydride,

with an aromatic diamine belonging preferably to the group comprising :

- 3,3'-(or 4,4') diphenyldiamine (DPA),
- 4,4'-diamino diphenylether (ODA),
- m-(or p-) diamino benzene (BDA),
- 4,4'-diamino diphenylmethane (MDPA).
- 2,2-Bis(4-aminophenyl)hexafluoropropane (6FBA)
- 4, 4'-Sulfonyl (benzeneamine)
- 3, 3'-Sulfonyl (benzeneamine).

The hard oligoimide blocks A may present as reactive terminal groups an allyl or an anhydrido or alkylamino group, i.e. groups which are used for polycondensation with the parent soft block B carrying the counter reactive group.

A list that shoud not be intended as exhaustive of typical hard oligoimide A block intermediates can be represented by the structures a1, a2, a3 below :

a1) 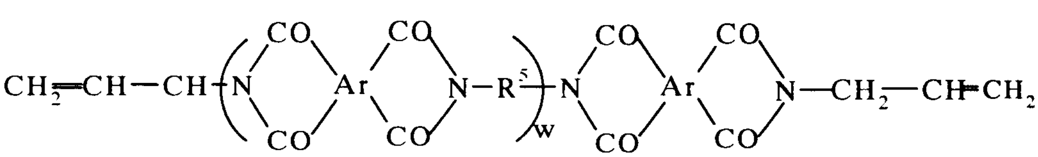

a2) 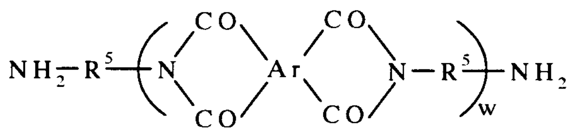

a3) 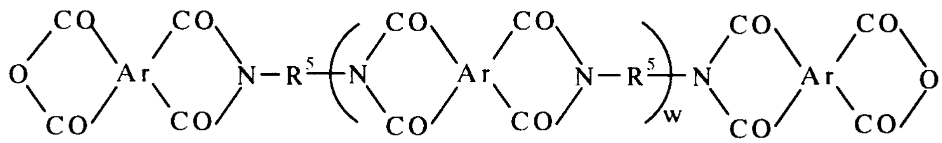

where $R^5$ is an aromatic group such as $-C_6H_4-$, $-C_6H_4-O-C_6H_4-$, $-C_6H_4-CH_2-C_6H_4-$,$-C_6H_4-C_6H_4$, and Ar represents a tetravalent aromatic ring or polyring system belonging preferably to the group comprising benzene, benzophenone, isopropylidene diphenyl, hexafluoroisopropylidene diphenyl, oxydiphenyl, naphthalene, and derivatives thereof.

The aromatic oligoimide a3 where

Ar = 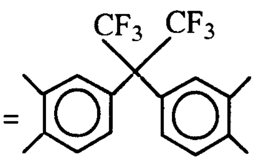

and $R^5$ is $-C_6H_4-O-C_6H_4-$ is prepared by reaction of 4,4'-(hexafluoroisopropylidene)diphthalic anhydride (6FDA) in excess with 4,4'-diaminodiphenylether (ODA) in a molar ratio (6FDA) / (ODA) from about 10 : 5 to 10 : 9, in refluxing acetic acid for 5h.

The resulting oligoimide (VII) shown in Scheme 1 is then partly reacted with excess allylamine (1.5 times the number of dianhydride groups) at the reflux temperature for another 5 h and the telechelic diallylamido type a1 (VIII) shown in Scheme 1 is obtained and separated from the other reagents by dilution with the minimum of dioxane, precipitation with excess of water, filtration, then dried at 120°C under vacuum.

According to another embodiment of the invention the condensation of (6FDA) and (ODA) is performed in a solution of o-dichlorobenzene in the presence of 3 wt% of 2-hydroxypyridine as catalyst at 150°C ; after heating at 100°C for 2 h the temperature is raised at 150-180°C for another 3 h while the water is removed by distillation, then the solvent and the catalyst are distilled off under vacuum.

The telechelic diamino oligoimide a2 is obtained according to the procedure described above by reacting the dianhydride a3 with an excess of aromatic diamine.

SCHEME 1

xi) 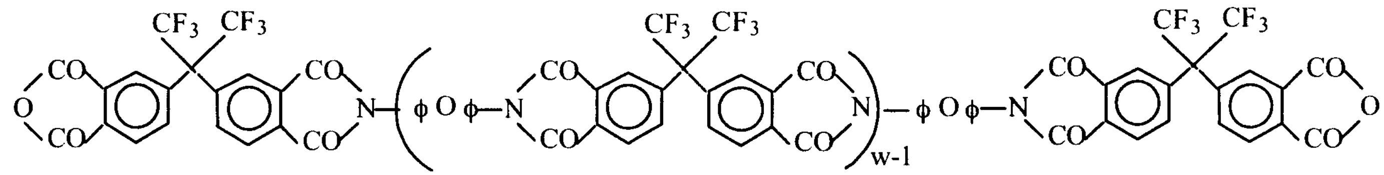

(VII)

xii) 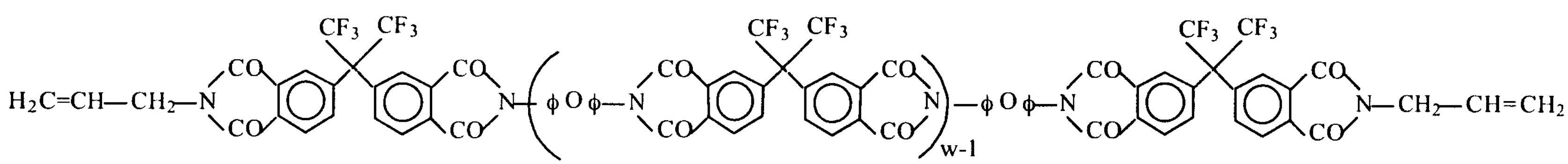

(VIII)

ϕ represents the group $-C_6H_4-$

The invention also relates to a method for the obtention of block copolymers (I), (I'), (II) and (II').

The linkages between blocks A and B can be obtained by a silylation reaction such as the catalyzed addition of a -SiH terminated group of soft block B to an unsaturated group present at the terminal end of the A oligoimide hard block, or said linkages between A and B can be obtained by the known method of cycloimidization of aromatic dianhydrides with diamino groups which are present at the end of the building blocks A or B.

Scheme 2 below illustrates a way of obtaining the F-TPE block copolymers of the invention by reacting hard block A and soft block B :

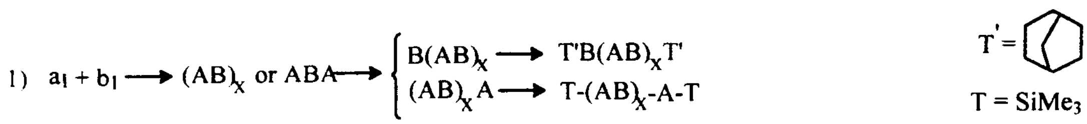

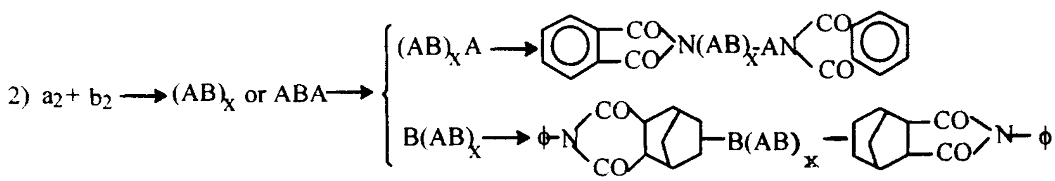

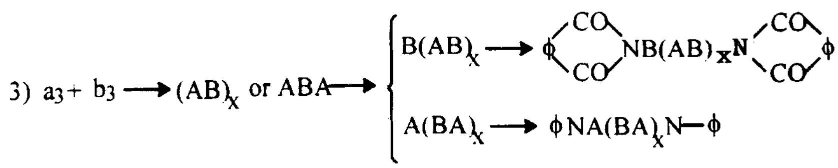

($\phi$ represents a group $-C_6H_5$).

In particular, the F-TPEs of the invention can be obtained by Pt-catalyzed silylation of the telechelic unsaturated oligoimide al with the telechelic hybrid bis hydrosilasiloxane b1 in particular by reaction of the telechelic diallyl oligoimide (VIII) with the hybrid telechelic bis hydrosilafluorosiloxane (IX)

$$HSi(CH_3)_2[OSi(CH_3)_2]_m\{-C_3H_6-C_3F_6-C_4F_8-C_3F_6-C_3H_6-Si(CH_3)_2[OSi(CH_3)_2]_m-\}_v-H \quad (IX).$$

When the molar ratio (VIII) / (IX) is in the range from about 1: 1.04 to 1 : 1.2 in the presence of Karstedt catalyst, a block copolymer type $(AB)_x$ is obtained where the desired value of v is from about 5 to 25. A second step of reaction with $SiH_2R^1R^2$ is preferably carried out to completely achieve the structure B-(AB)x, where the terminal entities are hydrosila groups (-SiH), or the $(AB)_x$ type copolymer can be end-capped with a further excess of telechelic bis hydrosilafluorosiloxane (IX). Then by reaction with an excess of bicyclo[2.2.1]hept-2-ene the end-capped block copolymer of structure:

$$TB-(AB)_x-T$$

where T is bicyclo[2.2.1]heptane is obtained.

When the molar ratio (VIII) / (IX) is from about 2 : 1 to 2.2 : 1, a block copolymer type A-B-A is obtained which can further be end-capped with phenyl dimethylsilane (or diphenylmethylsilane).

According to an alternative conventional procedure the block copolymers can be obtained by condensation of the oligosilicone (X):

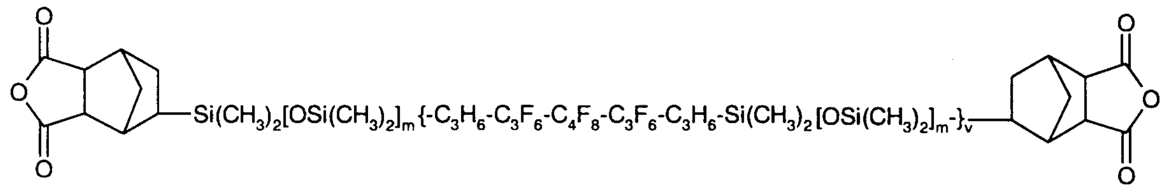

(X)

with an oligoimide (XI) :

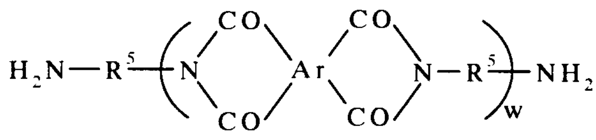

(XI)

where $R^5$ and Ar are as defined above.

The condensation is generally performed in o-dichlorobenzene in the presence of 2-hydroxypyridine as catalyst.

Depending on the molar ratio (X) / (XI) and the methodology previously described, different block copolymers can be obtained and in particular the type $B(AB)_x$ can be end-capped with aniline and the type $(A-B)_x$-A can be end-capped with phthalic anhydride.

It will therefore be understood that the invention relates, according to one of its embodiment, to the end-capped block copolymers of formula (I') or (II') in which T and T' each independently represent a group preferably selected from bicyclo[2.2.1]hept-2-yl, trimethylsilane, dimethylphenylsilane, methyldiphenyl silane, anilino or anhydrido such as e.g. phthalicanhydrido.

According to another feature, the invention further relates to the manufactured articles made of the block copolymers of the invention. The said block copolymers, which present the backbone structure type $(AB)_X$ or ABA indeed exhibit the physical properties of thermoplastic elastomers, with low glass transition temperatures, namely from -60 to 20°C, preferably from -40 to 0°C as measured by DSC or by DMTA, as well as transition temperatures from 165 to 300°C, preferably from 170 to 250°C.

In addition the block copolymers of the invention can be molded and remolded in different shapes and thin coatings, at temperatures in the range of 180-250°C or above, under pressure, showing a good workability.

Further physical properties of said block copolymers are as follows.

The DMTA showed a decay of the storage modulus between 50 and 150°C in the range of one decade MPa and between -50 to +50°C a decade from 1 to 3 order of magnitude.

The characterization by TGA showed the high thermostability of the F-TPEs of the invention up to 350 - 400°C in nitrogen and up to 300°C in air.

The surface tension of films of said F-TPEs are in the range 25-28 mN/m, by contact angle measurements with $H_2O$, $CH_3I$ and hexadecane.

The films obtained by heat molding under pressure of the F-TPEs of the invention are, at room temperature, very flexible, very resistant to traction, transparent and hydrophobic.

The properties of the F-TPEs of the invention such as :

- thermoresistance (better than the conventional block copolymers polyimide-dimethylsilicone),
- low surface tension,
- low water absorption,
- good workability,
- good low temperature flexibility (better than conventional polyimide),
- good mechanical properties (better than the block copolymers polyimide-dimethylsilicone), make it possible to contemplate their use as insulant and dielectric materials for the electronic industry (encapsulation, multilayers chips, coatings), coatings and cladding for optical fibers and components, membranes and binders for electrical batteries, material able to improve the surface and protective properties of the conventional polyimides.

The following examples illustrate the invention without implying a limitation.

In these examples, the following abbreviations are used :

DVTMDS : divinyltetramethyldisiloxane
FT-IR : Fourier transform - infra red
NMR : nuclear magnetic resonance
DSC : differential scanning calorimetry
Mn : number average molecular weight.

Reference example

General synthesis of $H_2C=CH\ R_F\ CH=CH_2 + H\text{-}SiR^1R^2(OSiR^1R^2)_mH$

1 to 15 $10^{-3}$ mole of diene were reacted with 1 to 25 $10^{-3}$ mole of dihydrosiloxane, in bulk or in a small amount of toluene, in the presence of Karstedt catalyst (Pt/DVTMDS). Depending on the nature of the dihydrosiloxane, the reaction was performed either in a flask under a nitrogen atmosphere or in a sealed reactor placed under an initial nitrogen pressure. The mixture was heated at 60 to 120°C during 5 h to 5 days.
After cooling and elimination of toluene and the excess dihydrosiloxane, the mixture was diluted with ether. Carbon black was added and the mixture was filtered over sodium sulfate to eliminate any trace of catalyst. Then the ether solution was concentrated.

Example 1

Preparation of oligosiloxane type b1 from $H_2C=CHCH_2\text{-}C_3F_6\text{-}C_4F_8\text{-}C_3F_6\text{-}CH_2CH=CH_2$ and $HSi(CH_3)_2OSi(CH_3)_2H$

11.073g ( 19 $10^{-3}$mol) of diene $H_2C=CHCH_2\text{-}C_3F_6\text{-}C_4F_8\text{-}C_3F_6CH_2CH=CH_2$ and 3.368g (25.1 $10^{-3}$mol) of 1,1,3,3-tetramethyldisiloxane were placed in a reactor with 80 weight % toluene and Karstedt catalyst (Pt/DVTMDS). The reactor was placed under a nitrogen initial pressure of 7 bars.
The hydrosilylation was carried out at 90°C during 4 days.
After cooling, the crude mixture was treated as described in the reference example and after ether evaporation, the expected corresponding oligo $\alpha,\omega$-disilane (type b1, $R_1=R_2=CH_3$, v=3.4) was obtained (v = 3.4 calculated from $^1H$ NMR).
FT-IR: 2135 $cm^{-1}$ ($\nu$ Si-H)
$^1H$ NMR ($CDCl_3$) : 0.48 to 0.99 [multiplet ($-CH_2\text{-}Si(\underline{CH_3})_2\text{-}O\text{-}Si(\underline{CH_3})_2\text{-}CH_2\text{-}$], 0.165 [doublet $H\text{-}Si(\underline{CH_3})_2\text{-}O\text{-}Si(CH_3)_2\text{-}CH_2\text{-}$], 0.575 [$-O\text{-}Si(CH_3)_2\text{-}\underline{CH_2}\text{-}$], 1.65 ($-Si(CH_3)_2\text{-}CH_2\text{-}\underline{CH_2}\text{-}$), 2.17 ($-CH_2\text{-}CH_2\text{-}\underline{CH_2}\text{-}C(CF_3)F\text{-}$), 4.69 ($\underline{H}\text{-}Si(CH_3)_2\text{-}O\text{-}$) $^{19}F$ NMR($CDCl_3/CFCl_3$) : -74.85 [$-(C\underline{F_3})CF\text{-}$], -118 [$-(CF_3)CFC\underline{F_2}\text{-}$], -121 [$-(CF_3)CFCF_2C\underline{F_2}\text{-}$], -122 [$-(CF_3)CFCF_2CF_2C\underline{F_2}\text{-}$], -182 [$-(CF_3)C\underline{F}\text{-}$] $^{29}Si$ NMR ($CDCl_3$) : +9.9 ($H\text{-}Si(CH_3)_2O\text{-}\underline{Si}(CH_3)_2\text{-}$), +7.5 ($-CH_2\text{-}O\text{-}\underline{Si}(CH_3)_2\text{-}O\text{-}\underline{Si}(CH_3)_2\text{-}O\text{-}CH_2\text{-}$), -6.0 ($H\text{-}\underline{Si}(CH_3)_2O\text{-}Si(CH_3)_2\text{-}$).
DSC (20° /mn) $T_g$ = - 62°C
According to this procedure two other dihydro oligosiloxanes (type b1, v = 6.7 and 11) were prepared and their $T_g$s were -54°C and -50°C respectively.

Example 2

Preparation of $HSi(CH_3)_2[OSi(CH_3)_2]_2\text{-}\{\text{-}C_3H_6\text{-}C_3F_6\text{-}C_4F_8\text{-}C_3F_6\text{-}C_3H_6\text{-}Si(CH_3)_2[OSi(CH_3)_2]_2\text{-}\}_v\text{-}H$

According to the procedure described in the reference example 9.9g (17 $10^{-3}$mole) of diene and 4.8g (23 $10^{-3}$mole) of hexamethyl trisiloxane (from ABCR) were placed in a three necked flask under nitrogen in the presence of Pt/DVTMDS and the mixture was heated at 60°C for 5 h.
After usual treatment, the corresponding oligosiloxane type bl was obtained with v = 4.2 (from $^1H$ NMR) and $R_1=R_2=CH_3$ and m=2.
FT-IR: 2124 $cm^{-1}$ ($\nu$ Si-H)
$^1H$ NMR: m from 0 to 0.15 [$OSi(C\underline{H_3})_2O$]; m centered at 0.19 [$OSi(C\underline{H_3})_2H$]; m centered at 0.6 ($C\underline{H_2}Si$); m centered at 1.65 ($C\underline{H_2}CH_2Si$); m centered at 2.2 ($C\underline{H_2}$/HFP); m centered at 4.75 (SiH)
$^{19}F$ NMR: -75 [$(C\underline{F_3})CF$]; -118 [$(CF_3)CFC\underline{F_2}$]; -121 [$(CF_3)CFCF_2C\underline{F_2}$];.-122 [$(CF_3)CFCF_2\ CF_2C\underline{F_2}$]; -182 [$(CF_3)C\underline{F}$]
$^{29}Si$ NMR: +7 internal $CH_2\underline{Si}OSi$; -6.6 terminal $O\underline{Si}H$; -18.7 terminal $O\underline{Si}OSiH$; -19.9 internal $CH_2SiO\underline{Si}OSiCH_2$
DSC: $T_g$ = - 67°C

Example 3

Preparation of a dianhydride end-capped oligoimide (a3-1).

In a one liter two-neck flask, 32.5691 g (73.3 $10^{-3}$mol) of 4,4'-(hexafluoroisopropylidene)diphthalic anhydride (6FDA) and 9.5315 g (47.60 $10^{-3}$mol) of 4,4'-oxydianiline (ODA) were dissolved in 750 mL of acetic acid. Then the solution was stirred and heated at reflux during 2.5 h. After cooling to room temperature, the white powder precipitated from acetic acid, was washed, filtered and dissolved in dioxane and precipitated with cold water. The resulting solid was filtered and dried at 100°C during 80 h under vacuum. Yield 38.21 g (95%)
The resulting polymer (a3-1) was characterized as follows :
$^1$H NMR ($CDCl_3$) : no more aromatic protons of the starting diamine ODA, 7.3 (center of AB system : aromatic protons of the diphenyl ether groups), 7.95 (multiplet : aromatic protons of the 6FDA moiety).
$^{19}$F NMR ($CDCl_3/CFCl_3$) : -63.5 ( singlet : $-CF_3$)
FT-IR (KBr): Two carbonyl absorption bands of anhydride end-groups at 1860 and 1785 $cm^{-1}$ and the two carbonyl characteristic absorption bands of imide groups at 1785 and 1722 $cm^{-1}$.
DSC (20°/mn) : Tg = +188°C
Mn=1540 g/mol and w=1.8 (by $^1$H NMR, formula (VII))

Example 4

Preparation of diallyl end-capped oligoimide (a1-1) of formula (VIII)

38.21 g (25.62 $10^{-3}$ mol) of oligoimide (a3-1) prepared according to example 3, were dissolved in 750 mL of acetic acid and heated under reflux until complete solubilization. Then 4.4 g (77.06 $10^{-3}$ mol) of allylamine were added dropwise to the warm solution. After 3 h at 115°C, the mixture was cooled to room temperature and acetic acid was evaporated. The crude product was dissolved in 300 mL of dioxane and precipitated in 6L of cold water. The resulting polymer (a1-1) was filtered and dried to give 35 g (21.60 $10^{-3}$ mol) of a white powder (yield 85%).

The diallyl end-capped oligoimide (a1-1) was characterized as follows :
$^1$H NMR ($CDCl_3$) : 4.31 ($-N-\underline{CH_2}-CH=CH_2$), 5.25 ($-N-CH_2-CH=\underline{CH_2}$), 5.90 ($-N-CH_2-\underline{CH}=CH_2$), 7.31 (center of AB system : aromatic protons of the diphenyl ether groups); 7.90 (multiplet : aromatic protons of the 6FDA moiety).
$^{19}$F NMR ($CDCl_3/CFCl_3$) : singlet at -63.5 ($-CF_3$ group)
The number average molecular weight, Mn, of the diallyl end-capped oligoimide is determinated by $^1$H NMR, using the integral ratio of the signal of aromatic protons of 6FDA (from 7.7 to 8.2), versus the integral signal of the allylic protons (from 4.3 to 5.9).
Mn = 1620g/mol and w = 1.8 (formula VIII)
FT-IR (KBr) : disappearance of the carbonyl absorption bands the dianhydride group, two charateristic absorption bands of imide group at 1778 and 1722 $cm^{-1}$.
DSC (20°C/mn) : Tg = +155°C
The diallyl end-capped oligoimide (a1-1) was soluble in chloroform, dioxane and hot toluene.

Example 5

Preparation of aromatic amine end-capped oligoimide (a2-1).

The procedure of example 4 was repeated, starting from 1.8532 g ( 1.20 $10^{-3}$ mol) of oligoimide (a3-1), prepared according the procedure described in example 3, and 0.4916 g (2.45 $10^{-3}$ mol) of 4,4'-oxydianiline. 2.034 g (yield 90%) of aromatic amine end-capped oligoimide (a2-1) as a white powder, were obtained and characterized as follows :
$^1$H NMR ($CDCl_3$) : 4.1 ( broad signal : $-NH_2$), 6.75-7.1 (AB system of the aromatic protons of ODA moiety), 7.31 ( center of AB system of diphenyl ether groups), 7.91 (multiplet aromatic protons of 6FDA).
$^{19}$F NMR ($CDCl_3/CFCl_3$) : -63.6 ($CF_3$ of 6FDA)
FT-IR (KBr) : Two absorption bands at 3415 and 3480 $cm^{-1}$ ($-NH_2$) and two absorption bands at 1785 and 1723 $cm^{-1}$ (-C=O imide).
DSC (20°C/mn) : Tg = 221 °C
Mn = 1900 g/mol and w = 2.8 (formula a2)

Example 6

Preparation of a fluorinated thermoplastic elastomer TPE (cl-15) containing about 16 weight-% of diallyl end-capped oligoimide (a1-1).

The polyhydrosilylation was performed as follows :

In a 500 mL two-necked flask, equipped with a condenser, a solution of 300 mL of toluene, 3.61 g (2.23 $10^{-3}$ mol) of diallyl end-capped oligoimide (a1-1), prepared as described in example 4, and 18.66 g (2.33 $10^{-3}$ mol) of oligosiloxane (type b1, v=11), prepared according to the procedure described in example 1, was heated at 60°C. Then 100 µL of a solution of Karstedt catalyst (platinum-divinyltetramethyldisiloxane complex in xylene (2.1-2.4% platinum concentration)) was added. The mixture was left 12h at 60°C. After cooling to room temperature, the solvent was evaporated and the resulting product was dried 24 h at 120°C under vacuum. 22.27 g (yield 100%) of block copolymer, TPE (c1-15), were obtained and characterized as follows :
$^1$H NMR ( $CDCl_3$) : disappearance of the allylic signals between 4.4 and 6.0, 0.056 ($\underline{CH_3}$-Si-), 0.54 (-$CH_2$-$\underline{CH_2}$-Si-), 1.59 (-$CH_2$-$\underline{CH_2}$-$CH_2$-), 2.14 (-$\underline{CH_2}$-C($CF_3$)F-), 3.65 (-N-$\underline{CH_2}$-$CH_2$-), 7.30 ( center of AB system : aromatic protons of the diphenyl ether groups), 7.9 (multiplet of aromatic protons of 6FDA group).
$^{19}$F NMR ($CDCl_3$/$CFCl_3$) : -63.7 (-$\underline{CF_3}$ of 6FDA group), -75.3 (-$CH_2$-C($\underline{CF_3}$)F-$CF_2$-),-118 (-C($CF_3$)F-$\underline{CF_2}$-$CF_2$-$CF_2$-), -120.9 (-C($CF_3$)F-$CF_2$-$\underline{CF_2}$-CF,-), -121.9 (-C($CF_3$)F-$CF_2$-$CF_2$-$\underline{CF_2}$-), -182 (-C($CF_3$)$\underline{F}$-$CF_2$-$CF_2$-).
FT-IR (KBr) : no more -Si-H absorption band at 2130 $cm^{-1}$.

Other physical characteristics of this fluorinated thermoplastic elastomer TPE (cl-15) are summarized in Table 1.

Example 7

The preparation of the fluorinated thermoplastic elastomer TPE (c1-40) containing 38 wt% of oligoimide (a1-1), was of the same type as described in example 6, but starting from 19.91g (12.29 $10^{-3}$ mol) of oligoimide (a1-1) (see example 4) and 32.39g (12.61 $10^{-3}$ mol) of oligosiloxane (type b1, m=1, v=3.4), prepared according to the procedure described in example 1. 52.30 g (yield 100%) of the resulting block copolymer, TPE (c1-40), were obtained and characterized as follows :
$^1$H NMR ( $CDCl_3$) : disappearance of the allylic signals between 4.4 and 6.0, 0.065 ($\underline{CH_3}$-Si-), 0.57 (-$CH_2$-$\underline{CH_2}$-Si-), 1.56 (-$CH_2$-$\underline{CH_2}$-$CH_2$-Si-), 2.25 (-$\underline{CH_2}$-C($CF_3$)F-), 3.68 (-N-$\underline{CH_2}$-$CH_2$-), 7.31 ( center of AB system : aromatic protons of the diphenyl ether groups), 7.9 (multiplet of aromatic protons of 6FDA group).
$^{19}$F NMR ($CDCl_3$/$CFCl_3$) : -63.6 (-$\underline{CF_3}$ of 6FDA group), -74.6 (-$CH_2$-C($\underline{CF_3}$)F-$CF_2$-),-118 (-C($CF_3$)F-$\underline{CF_2}$-$CF_2$-$CF_2$-), -120.4 (-C($CF_3$)F-$CF_2$-$\underline{CF_2}$-$CF_2$-), -121.8 (-C($CF_3$)F-$CF_2$-$CF_2$-$\underline{CF_2}$-), -181.8 (-C($CF_3$)$\underline{F}$-$CF_2$-$CF_2$-).
$^{29}$Si NMR ($CDCl_3$) : +7.4 (-O-$\underline{Si}$-$CH_2$-)
FT-IR (KBr) : no more -Si-H absorption band at 2130 $cm^{-1}$.

Other physical characteristics of this fluorinated thermoplastic elastomer TPE (c1-40) are summarized in Table 1.

Example 8

The preparation of the fluorinated thermoplastic elastomer TPE (c1-23), containing about 23 wt% of oligoimide (a1-1) was the same as described in example 6, starting from 5.444 g (3.36 $10^{-3}$ mol) of oligoimide (a1-1) (see example 4) and 18.00 g (3.6 $10^{-3}$ mol) of oligosiloxane (type b1, v=6.7), prepared according to example 1. 23.44 g (yield 100%) of the resulting block copolymer TPE (c1-23), were obtained and characterized as follows :
$^1$H NMR ( $CDCl_3$): disappearance of the allylic signals between 4.4 and 6.0, 0.062 ($\underline{CH_3}$-Si-), 0.54 (-$CH_2$-$\underline{CH_2}$-Si-), 1.61 (-$CH_2$-$\underline{CH_2}$-$CH_2$-Si-), 2.12 (-$\underline{CH_2}$-C($CF_3$)F-), 3.65 (-N-$\underline{CH_2}$-$CH_2$-), 7.31 ( center of AB system : aromatic protons of the diphenyl ether groups), 7.93 (multiplet of aromatic protons of 6FDA group).
$^{19}$F NMR ($CDCl_3$/$CFCl_3$) : -63.5 (-$\underline{CF_3}$ of 6FDA group), -73.9 (-$CH_2$-C($\underline{CF_3}$)F-$CF_2$-),-118.2 (-C($CF_3$)F-$\underline{CF_2}$-$CF_2$-$CF_2$-),-120.8 (-C($CF_3$)F-$CF_2$-$\underline{CF_2}$-$CF_2$-), -121.4 (-C($CF_3$)F-$CF_2$-$CF_2$-$\underline{CF_2}$-),-181.2 (-C($CF_3$)$\underline{F}$-$CF_2$-$CF_2$-).
$^{29}$Si NMR ($CDCl_3$) : +7.38 (-O-$\underline{Si}$-$CH_2$-)
FT-IR (KBr) : no more -Si-H absorption band between 2120 and 2130 $cm^{-1}$.

Example 9

The preparation of the fluorinated thermoplastic elastomer TPE (c1-30), containing about 30 wt% of oligoimide (a1-1) was the same as described in example 6, starting from 8.26 g ( 5.10 $10^{-3}$ mol) of oligoimide (a1-1) and 18.12 g (5.14 $10^{-3}$ mol) of oligosiloxane (type b1, v = 4.2, m = 2), prepared according to example 2. 26.38 g (yield 100%) of

the resulting block copolymer TPE (c1-30) were obtained and characterized as follows :
$^1H$ NMR ( $CDCl_3$) : disappearance of the allylic signals between 4.4 and 6.0, 0.064 ($CH_2$-Si($\underline{CH_3}$)O-), 0.15 [OSi($C\underline{H_3}$)$_2$O]; 0.55 (-$CH_2$-$\underline{CH_2}$-Si-O), 1.60 (-$CH_2$-$\underline{CH_2}$-$CH_2$-Si-O), 2.14 (-$\underline{CH_2}$-C($CF_3$)F-), 3.64 (-N-$\underline{CH_2}$-$CH_2$-), 7.32 ( center of AB system : aromatic protons of the diphenyl ether groups), 7.94 (multiplet of aromatic protons of 6FDA group).
$^{19}F$ NMR ($CDCl_3$/$CFCl_3$) : -63.6 (-$\underline{CF_3}$ of 6FDA group), -73.8 (-$CH_2$-C($CF_3$)F-$CF_2$-),-118.4 (-C(CF3)F-$\underline{CF_2}$-$CF_2$-$CF_2$-), -120.8 (-C($CF_3$)F-$CF_2$-$\underline{CF_2}$-$CF_2$-), -121.5 (-C($CF_3$)F-$CF_2$-$CF_2$-$\underline{CF_2}$-), - -181.4 (-C($CF_3$)$\underline{F}$-$CF_2$-$CF_2$-).
$^{29}Si$ NMR ($CDCl_3$) : +7.38 (-O-$\underline{Si}$-$CH_2$-), -19.4 [O$\underline{Si}$($CH_3$)$_2$O]
FT-IR (KBr) : no more -Si-H absorption band between 2120 and 2130 $cm^{-1}$.

Example 10

Preparation of the dihydrotrisiloxane : H[Si($CH_3$)($C_2H_4C_4F_9$)O]$_2$Si($CH_3$)($C_2H_4C_4F_9$)H

3.65g (0.0125 mol) of $C_4F_9C_2H_4Si(CH_3)H_2$ (prepared by reduction of the corresponding dichlorosilane with $AlLiH_4$) was hydrolyzed by 0.011 mole of water coming from 0.2mL of a buffered solution of $NaH_2PO_4$ diluted in 12.5 mL of dioxane and in the presence of 0.125g of Pd/$Al_2O_3$ (5%). The reaction was performed at 30°C for 24 h. After cooling, the reaction mixture was diluted by 20mL of dioxane and dried over $Na_2SO_4$. Distillation of the crude product gave a first fraction of dihydrodisiloxane [HSi($CH_3$)($C_2H_4C_4F_9$)]$_2$O [Yield = 50%, bp = 114°C (20mm Hg)] and a second fraction of the expected trisiloxane H[Si($CH_3$)($C_2H_4C_4F_9$)O]$_2$Si($CH_3$)($C_2H_4C_4F_9$)H.
Yield = 40%, bp = 140°C (20mm Hg)
FT-IR: 2137 $cm^{-1}$ ($\nu$ Si-H)
$^1H$ NMR ($CDCl_3$): 0.1 (m, 3H) central $\underline{CH_3}$ Si; 0.25 (d, 6H) lateral $\underline{CH_3}$ Si; 0.80 (m, 2H) central $\underline{CH_2}$Si; 0.90 (m, 4H) lateral $\underline{CH_2}$Si; 2.1 (m, 6H) $\underline{CH_2}CF_2$; 4.7 (2H) SiH $^{19}F$ NMR ($CDCl_3$/$CFCl_3$): -81.5 $\underline{CF_3}CF_2$; -117 $CH_2\underline{CF_2}CF_2$; -125 $CF_3CF_2\underline{CF_2}CF_2$;-126.5 $CF_3\underline{CF_2}CF_2$
$^{29}Si$ NMR ($CDCl_3$): -5.3 s when $^1H$ are irradiated and d $^1J$(Si-H) = 198 Hz without irradiation; -18.6 (s) O$\underline{Si}$O or central Si.

Example 11

Preparation of oligosiloxane type b1 with m=2, $R_1$=-$CH_3$ and $R_2$=-$C_2H_4C_4F_9$ from H[Si($CH_3$)($C_2H_4C_4F_9$)O]$_2$Si($CH_3$)($C_2H_4C_4F_9$)H and $CH_2$=$CHCH_2$-$C_3F_6$-$C_4F_8$-$C_3F_6$-$CH_2CH$=$CH_2$

According to the procedure of the reference example 9.89g (17 $10^{-3}$mole) of diene and 20.79g (23 $10^{-3}$mole) of dihydrotrisiloxane prepared according to the procedure described in example 10, were reacted in a three-necked flask under nitrogen in the presence of Pt/DVTMDS, at 60°C for 5 h to give, after usual treament the corresponding oligosiloxane type bl with m=2, $R_1$= $CH_3$ , $R_2$= $C_2H_4C_4F_9$ and v = 3.10 (measured by $^1H$-NMR) was obtained.

Example 12

The preparation of the fluorinated thermoplastic elastomer TPE (c1-20) containing 20 wt% of oligoimide (a1-1), was the same as described in example 6, starting from 8.lg ( 5 $10^{-3}$ mol) of oligoimide (a1-1) (see example 4) and 27.83g ( 5.05 $10^{-3}$ mol) of oligosiloxane prepared according to the procedure described in example 11. 35.93 g (yield 100%) of the resulting block copolymer, TPE (c1-20), were obtained after usual treatment.

Example 13

Preparation of the dianhydride end-capped oligosiloxane (type b2, m=1, v=3.4) A solution in toluene (20mL) of 5.20g (2.07 $10^{-3}$ mol) of oligosiloxane (type b1, m=1, v=3.4), prepared according to example 1, and 0.68 g (4.16 $10^{-3}$ mol) of bicyclo[2.2.1]hept-5-ene-*exo*-2,3-dicarboxylic anhydride was heated to 80°C under nitrogen in the presence of Pt/DVTMDS. The reaction was complete within lh and the resulting product was characterized as follows :
FT-IR : no more Si-H absorption band at 2135 $cm^{-1}$
$^1H$ NMR : disappearance of the vinyl signal of the bicyclo compound at 6.2 ppm.

Example 14

Preparation of the fluorinated thermoplastic elastomer TPE (c2-50) containing about 49 wt% of oligoimide.

The polycondensation was performed as described in example 3, starting from 12.60 g (4.68 $10^{-3}$ mol) of aromatic amine end-capped oligoimide (type a2, w = 4.10), prepared according to the procedure given in example 5,

and 13.84 g (4.78 $10^{-3}$ mol) of dianhydride end-capped oligosiloxane (type b2, m=1, v=3.4), prepared according to example 13. 22.5 g (85%) of the resulting block copolymer, TPE (c2-50), were obtained after usual treatment.

Example 15

The bishydrosilane (i)

(i) $HSi(CH_3)_2OSi(CH_3)_2$-[-$C_3H_6$-$C_3F_6$-$C_4F_8$-$C_3F_6$-$C_3H_6$-$Si(CH_3)_2OSi(CH_3)_2$-]$_{3.4}$-H was prepared from 11.073 g (19 $10^{-3}$mol) of diene $H_2C=CHCH_2$-$C_3F_6$-$C_4F_8$-$C_3F_6CH_2CH=CH_2$ and 3.368 g (25.1 $10^{-3}$ mol) of 1,1,3,3-tetramethyldisiloxane in a solution of toluene in the presence of Karstedt catalyst (Pt/DVTMDS). The hydrosilylation was carried out at 90°C in a reactor filled with nitrogen at 7 bars and for 4 days. After cooling the crude mixture was treated at atmospheric pressure to evaporate the catalyst and the toluene and the title compound was obtained, (v=3.4 calculated from $^1$H-NMR).

The bishydrosilane was converted to telechelic bissilanol (ii):

(ii) HO-$Si(CH_3)_2$-$OSi(CH_3)_2$-[-$C_3H_6$-$C_3F_6$-$C_4F_8$-$C_3F_6$-$C_3H_6$-$Si(CH_3)_2$-$OSi(CH_3)_2$-]$_{3.4}$-OH by oxidative hydrolysis catalyzed by $Pd/Al_2O_3$ in the presence of $NaH_2PO_4$ buffered aqueous solution. Then the silanol was polymerized in the presence of tetraguanidine trifluoroacetate to a linear oligomer that was end-capped with $HSiCl(CH_3)_2$ in the presence of pyridine to obtain the telechelic hydrosilafluorosiloxane of formula (iii):

(iii) $HSi(CH_3)_2O$-{$Si(CH_3)_2OSi(CH_3)_2$-[-$C_3H_6$-$C_3F_6$-$C_4F_8$-$C_3F_6$-$C_3H_6$-$Si(CH_3)_2OSi(CH_3)_2$-]$_{3.4}$-O}$_y$-$Si(CH_3)_2H$ where y = 4 as evaluated by $^1$H-NMR.

By the same procedure as described in example 6, 1.91 g (1.18 $10^{-3}$ mol) of diallyoligoimide (a1-1), (Mw = 1620 g.mol$^{-1}$) prepared as described in example 4, have been reacted with 12.57 g (1.20 $10^{-3}$ mol) of the bishydrosilafluorosiloxane of formula (iii) and 14.48 g of TPE have been obtained containing about 13 wt% of oligoimide (a1-1) with a glass transition temperature near -50°C as determined by DSC.

TABLE 1

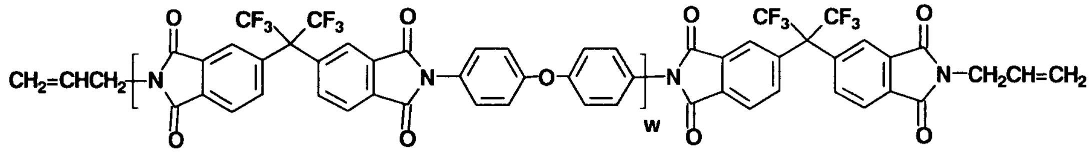

A

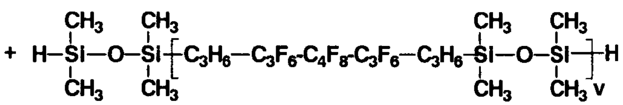

B

| | TPE (c1-15) | TPE (c1-40) |
|---|---|---|
| B (mole) | 2.33 $10^{-3}$ | 12.61 $10^{-3}$ |
| $MW_B$ | 8010 | 2568 |
| v | 11 | 3.4 |
| Tg (°C)/ DSC | -50 °C | - 62°C |
| A (mole) | 2.23 $10^{-3}$ | 12.29 $10^{-3}$ |
| $MW_A$ | 1620 | 1620 |
| w | 1.8 | 1.8 |
| Tg (°C) / DSC | + 155°C | + 155 °C |
| molar ratio A/B | 0.96 | 0.97 |
| $-(AB)_X-$ | x = 24 | x = 32 |
| wt% oligoimide | ~15 | ~40 |
| Tg (°C) / DSC | - 40 | - |
| Tg (°C) / DMTA | - 42 | -30 |
| Transition temperature (°C) | - | 170-178 |
| Storage modulus at - 50°C / 50°C / 150 °C | 1 GPa / 2 MPa / 0.5 MPa | 2 GPa / 20 MPa / 2 MPa |
| Surface tension (mN/m) | 26.7 | 27.5 |
| TGA 10% weight loss under $N_2$ (under air) | 420°C (340°C) | 410°C (360°C) |
| Hardness (Shore D) | 32 | 48 |

## Claims

1. A thermoplastic fluoroelastomer with a structure of block copolymer imido-hybrid fluorosilicone of formula (I) or (II):

$$-(AB)_X- \qquad (I)$$

$$A\text{-}B\text{-}A \qquad (II)$$

in which A is an oligoimide hard block obtained by condensation of an aromatic dianhydride with an aromatic diamine and B is a hybrid telechelic $\alpha,\omega$-bis silaoligosiloxane soft block of formula (III) or (III')

$$-SiR^1R^2\text{-}(OSiR^1R^2)_m[C_nH_{2n}\text{-}R_F\text{-}C_nH_{2n}\text{-}SiR^1R^2(OSiR^1R^2)_m]_v- \qquad (III)$$

$$-SiR\ ^1R^2O\{SiR^1R^2\text{-}(OSiR^1R^2)_m[C_nH_{2n}\text{-}R_F\text{-}C_nH_{2n}\text{-}SiR^1R^2(OSiR^1R^2)m]_V\text{-}O\text{-}\}_ySiR\ ^1R^2- \qquad (III')$$

in which :

- $R^1$ is methyl or phenyl,
- $R^2$ is methyl, $C_2H_4CF_3$ or $C_2H_4C_4F_9$,
- $R_F$ is a linear or branched fluorinated alkylene group of formula (IV)

$$-(C_2H_2F_2)_t\text{-}(R^3CF\text{-}CF_2)_q\text{-}R'_F\text{-}(CF_2\text{-}CFR^3)_q\text{-}(C_2H_2F_2)_t- \qquad (IV)$$

  in which :

  - $R^3$ is a fluorine atom or a trifluoromethyl,
  - $R'_F$ is a $(C_2\text{-}C_6)$perfluoroalkylene,
  - q and t are numbers such that the sum of all q and t is a number from 2 to 12,

- m is 1, 2 or 3,
- n is 2 or 3,
- v is a number from 1 to 20, preferably from 1 to 12,
- x is a number from 5 to 100, preferably from 10 to 50, and
- y is a number from 1 to 10.

2. The thermoplastic fluoroelastomer according to claim 1, in which oligosiloxane block B is one of the following compounds:

b1)

$$H\text{-}SiR^1R^2\text{-}(OSiR^1R^2)_m\text{-}[C_nH_{2n}\text{-}R_F\text{-}C_nH_{2n}\text{-}SiR^1R^2(\text{-}OSiR^1R^2)_m]_v\text{-}H$$

b2) 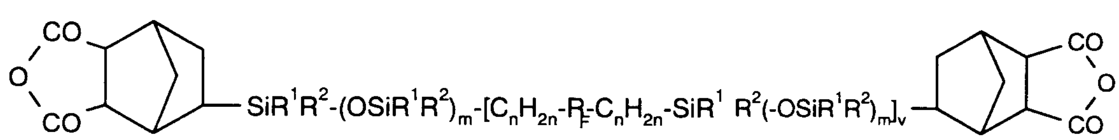

b3)

$$H_2NC_3H_6\text{-}SiR^1R^2\text{-}(OSiR^1R^2)_m\text{-}[C_nH_{2n}\text{-}R_F\text{-}C_nH_{2n}\text{-}SiR^1\ R^2(\text{-}OSiR^1R_2)_m]_v\text{-}C_3H_6NH_2$$

where $R^1$, $R^2$, $R_F$, m,n and v are as defined in claim 1.

**3.** The thermoplastic fluoroelastomer according to claim 1 or 2, in which $R_F$ is represented by formula (IVa) or (IVb)

$$\text{-}((CF_3)CF\text{-}CF_2)_q\text{-}R'_F\text{-}(CF_2\text{-}CF(CF_3))_q\text{-} \qquad \text{(IVa)}$$

in which q is 1 or 2,

$$\text{-}(C_2H_2F_2)_t\text{-}((CF_3)CF\text{-}CF_2)_q\text{-}R'_F\text{-}(CF_2\text{-}CF(CF_3))_q\text{-}(C_2H_2F_2)_t\text{-} \qquad \text{(IVb)}$$

in which q is 0, 1, 2 or 3 and t is 1, 2 or 3.

**4.** The thermoplastic fluoroelastomer according to claim 3, in which $R'_F$ is $C_4F_8$ or $C_6F_{12}$.

**5.** The thermoplastic fluoroelastomer according to one of claims 1 to 4, in which oligoimide block A is obtained by condensation of an aromatic dianhydride selected from the group comprising :

- pyromellitic dianhydride (PMDA),
- benzophenone tetracarboxylic dianhydride (CDPA),
- 3,3'4,4'-Bisphenyltetracarboxylic dianhydride (BPDA)
- 4,4'-(hexafluoroisopropylidene) diphthalic anhydride (6FDA),
- 4,4'-oxydiphthalic anhydride (ODPA),
- 2,3,6,7-naphthalene tetracarboxylic dianhydride (NDA),
- Bis(dicarboxyphenyl) sulfone dianhydride,
- Bis(dicarboxyphenyl) ether dianhydride,

with an aromatic diamine selected from the group comprising :

- 3,3'-(or 4,4') diphenyldiamine (DPA),
- 4,4'-diamino diphenylether (ODA),
- m-(or p-) diamino benzene (BDA),
- 4,4'-diamino diphenylmethane (MDPA).
- 2,2-Bis(4-aminophenyl)hexafluoropropane (6FBA)
- 4, 4'-Sulfonyl (benzeneamine)
- 3, 3'-Sulfonyl (benzeneamine).

**6.** The thermoplastic fluoroelastomer according to one of claims 1 to 4, in which oligoimide block A is one of the following compounds:

a1) 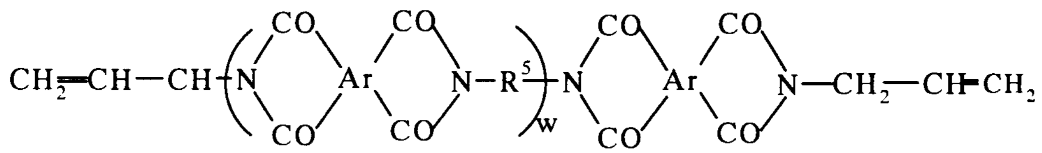

a2) 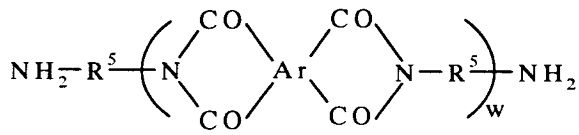

a3) 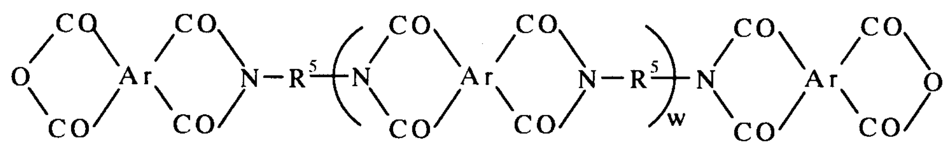

where $R^5$ is a group selected from $-C_6H_4-$, $-C_6H_4-O-C_6H_4-$, $-C_6H_4-CH_2-C_6H_4-$, $-C_6H_4-C_6H_4-$, Ar is a group selected from benzene, benzophenone, isopropylidene diphenyl, hexafluoroisopropylidene diphenyl, oxydiphenyl, naphthalene, or derivatives thereof, and w is as defined in claim 1.

**7.** The thermoplastic fluoroelastomer according to one of claims 1 to 6, which is end-capped and has the formula (I') or (II'):

$$T\text{-}(AB)_X\text{-}T' \qquad (I')$$

$$T\text{-}ABA\text{-}T \qquad (II')$$

in which T' can represent -AT and T and T' each independently represent a group selected from bicyclo[2.2.1]hept-2-yl, trimethylsilane, dimethylphenylsilane, methyldiphenylsilane, anilino or anhydrido.

**8.** The thermoplastic fluoroelastomer according to one of claims 1 to 7, which has a glass transition temperature of from -60 to 20°C, preferably from -40 to 0°C and a transition temperature of from 165 to 300°C, preferably from 170 to 250°C.

**9.** A coating made of the thermoplastic fluoroelastomer according to one of claims 1 to 8.

**10.** A manufactured article made of the thermoplastic fluoroelastomer according to one of claims 1 to 8.

**11.** The manufactured article according to claim 10, which is a membrane or a binder for electrical batteries.

European Patent Office

# EUROPEAN SEARCH REPORT

Application Number
EP 99 40 2729

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 041 513 A (OKINOSHIMA HIROSHIGE ET AL) 20 August 1991 (1991-08-20)<br>* column 2, formulae *<br>* columns 5, 6; formulae *<br>* column 9, line 22 - line 31 * | 1,2,5, 9-11 | C08G77/455 |
| A | DATABASE WPI<br>Week 199927<br>Derwent Publications Ltd., London, GB;<br>AN 1999-323601<br>XP002134929<br>& JP 11 116684 A (SHINETSU),<br>27 April 1999 (1999-04-27)<br>* abstract * | 1,2,9-11 | |
| A | EP 0 382 198 A (OCCIDENTAL CHEM CO)<br>16 August 1990 (1990-08-16)<br>* page 5, line 54 - line 55 *<br>* pages 9, 10, formulae *<br>* page 14, line 25 - page 15, line 23 *<br>* page 17, line 7 - line 8 * | 1,9-11 | TECHNICAL FIELDS SEARCHED (Int.Cl.7) |
| A | EP 0 924 257 A (AUSIMONT SPA)<br>23 June 1999 (1999-06-23)<br>* page 2, line 3 - line 5 *<br>* claim 1 * | 1,9-11 | C08G |

The present search report has been drawn up for all claims

| Place of search | Date of completion of the search | Examiner |
|---|---|---|
| BERLIN | 10 April 2000 | Hoepfner, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 40 2729

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2000

| Patent document cited in search report | Publication date | Patent family member(s) | Publication date |
|---|---|---|---|
| US 5041513 A | 20-08-1991 | JP 2536620 B | 18-09-1996 |
| | | JP 3006226 A | 11-01-1991 |
| | | DE 4017279 A | 06-12-1990 |
| | | KR 9511913 B | 12-10-1995 |
| JP 11116684 A | 27-04-1999 | NONE | |
| EP 0382198 A | 16-08-1990 | US 4996278 A | 26-02-1991 |
| | | CA 1331387 A | 09-08-1994 |
| | | JP 2245029 A | 28-09-1990 |
| EP 0924257 A | 23-06-1999 | IT MI972764 A | 15-06-1999 |
| | | JP 11240997 A | 07-09-1999 |

EPO FORM P0459

For more details about this annex : see Official Journal of the European Patent Office, No. 12/82